# EUROPÄISCHE PATENTSCHRIFT

(11) **EP 1 894 949 B1**
(45) Veröffentlichungstag und Bekanntmachung des Hinweises auf die Patenterteilung: **28.12.2011**
(21) Anmeldenummer: 07016922.2
(22) Anmeldetag: 29.08.2007
(51) Int. Cl.: C08F 242/00

(54) **Verfahren zur Herstellung von kaltgehärteten Biopolymeren**
Process for the preparation of cold-cured biopolymers
Procédé de préparation des biopolymères durcis à froid

(30) Priorität: 01.09.2006 DE 102006041121
(43) Veröffentlichungstag der Anmeldung: 05.03.2008
(73) Patentinhaber: HOBUM Oleochemicals GmbH, 21079 Hamburg (DE)
(72) Erfinder: Blumenstein, Michael Dr., 21614 Buxtehude (DE)
(74) Vertreter: UEXKÜLL & STOLBERG

(56) Entgegenhaltungen:
- EP-A- 0 045 136
- EP-A- 0 152 213
- WO-A-01/55240
- WO-A-03/051990
- WO-A-2005/016983
- US-B1- 6 174 948

## Beschreibung

Die vorliegende Erfindung betrifft ein Verfahren zur Herstellung kaltgehärteter Biopolymere, bei dem ein oder mehrere acrylierte oder methacrylierte oleochemische Verbindungen mit Peroxid und Vanadiumbeschleuniger bei Raumtemperatur oder leicht erhöhter Temperatur (bis 80°C) ausgehärtet werden. Dieses Verfahren kann zur Herstellung der reinen Biopolymere als auch für Copolymere und Verbundwerkstoffe eingesetzt werden.

Die Herstellung oleochemischer (Meth)Acrylate ist umfassend beschrieben (US 4 224 369, US 3 125 592, EP 0 437 001 A1). Auch der Einsatz von oleochemischen (Meth)Acrylaten zur Herstellung von Biopolymeren ist aus dem Stand der Technik bekannt. Insbesondere die Verwendung solcher Materialien zur Herstellung von Faserverbundwerkstoffen ist interessant und wurde bereits mehrfach beschrieben (EP 1 196 481 B1, DE 198 34 048 A1, EP 1 102 804 B1). Die Aushärtung der oleochemischen (Meth)Acrylate erfolgt radikalisch. Die radikalische Polymerisation kann durch Zerfall von Radikalprecursoren oder durch energiereiche Strahlung erfolgen. Nachteilig bei der Strahlungshärtung z. B. durch UV-Licht ist die geringe erzielbare Schichtstärke und die Absorption bei Verwendung von Fasern. Die bislang beschriebenen Verfahren unter Verwendung von Peroxiden umgehen diesen Nachteil zwar, jedoch benötigen sie zur hinreichenden Aushärtung Temperaturen von mindestens 100°C, vorzugsweise aber 180 bis 250°C.

Weiterhin sind Systeme auf Basis oleochemischer Epoxide bekannt, die mittels Säuren/Anhydriden ausgehärtet werden. Auch diese Systeme benötigen zur Aushärtung Temperaturen von mindestens 80°C, vorzugsweise aber 150 bis 200°C.

WO 01/55240 A1 beschreibt ein Verfahren zur Herstellung nachvernetzter Polymere, bei dem in einer ersten Stufe Umsetzungsprodukte von epoxidierten Fettsäureestern und/oder epoxidierten Triglyceriden mit Acrylsäure und/oder Methacrylsäure durch Umsetzung mit aliphatischen und/oder aromatischen Isocyanaten in die entsprechenden Polyurethane überführt und diese anschließend in einer zweiten Stufe in Gegenwart mindestens eines Radikalinitiators radikalisch nachvernetzt werden.

WO 03/051990 A1 beschreibt Acryl-Latex-Folien auf Basis von Rizinusöl (meth) acrylatderivaten. Diese werden in einem zweistufigen Verfahren erhalten, bei dem in einer ersten Stufe Monomere wie Rizinusöl(meth)acrylat durch Emulsionspolymerisation zu einer als Latex bezeichneten wässrigen Polymerdispersion umgesetzt werden und diese in einer zweiten Stufe in Form dünner Folien durch Autooxidation gegebenenfalls in Gegenwart von Metallsalzen als Sikkatoren nachvernetzt werden.

EP 0 152 213 A2 beschreibt härtbare Zusammensetzungen, die eine Epoxyverbindung oder eine Mischung eines durch freie Radikale härtbaren Materials, eines Polymers und eines Systems zur Bildung freier Radikale enthalten, wobei eine härtbare Monomer-Polymer-Mischung unter anderem acrylierte epoxidierte Sojaöle enthalten kann.

Petrochemische Acrylate können ebenfalls peroxidisch gehärtet werden. In der Regel geschieht dies thermisch bei erhöhten Temperaturen. Niedere Temperaturen erfordern Peroxide mit sehr niedriger SADT (Self Accelerating Decomposition Temperature), zum Beispiel Peroxydicarbonate wie CHPC (Dicyclohexylperoxydicarbonat). Das Einzige dem Erfinder bekannte kalthärtende System für petrochemische Acrylate ist ein spezielles Kalthärtungssystem der PERGAN GmbH, bestehend aus Isooctylmercaptoacetat, Calciumhydroxyd und tert.-Butylmonoperoxymaleat. Nach eigenen Untersuchungen ist dieses nicht in der Lage, oleochemische (Meth)Acrylate zu polymerisieren.

Der Erfindung liegt somit die Aufgabe zugrunde, ein Verfahren zur Herstellung kaltgehärteter Biopolymere bereitzustellen, wobei auf den Einsatz möglichst arbeitshygienisch günstiger Materialien geachtet werden sollte.

Zur Lösung dieser Aufgabe wird ein Verfahren zur Herstellung kaltgehärteter Biopolymere vorgeschlagen, bei dem oleochemisches (Meth)Acrylat mit Ketonperoxid, Hydroperoxid oder Mischungen davon und mit Vanadiumbeschleuniger bei Raumtemperatur oder leicht erhöhter Temperatur von weniger als 80°C ausgehärtet wird, wobei das oleochemische (Meth)Acrylat ein Fettsäureester ist, dessen Kohlenstoffkette zusätzlich mindestens einen (Meth)Acrylatrest trägt, und nicht durch Umsetzung mit Isocyanaten vorvernetzt ist.

Bevorzugte Ausführungsformen und Vorteile der Erfindung ergeben sich aus der nachfolgenden Beschreibung und den Patentansprüchen. Dabei wird der Einfachheit halber überwiegend die Schreibweise (Meth)Acrylat bzw. (Meth)Acrylsäure verwendet, die sowohl Acrylat bzw. Acrylsäure als auch Methacrylat bzw. Methacrylsäure sowie Mischungen von Acrylat bzw. Acrylsäure und Methacrylat bzw. Methacrylsäure umfasst.

Die Bereitstellung des oleochemischen (Meth)Acrylats erfolgt entweder durch die Veresterung oleochemischer Polyole, die beispielsweise nach dem im Patent EP 0 554 590 beschriebenen Verfahren hergestellt werden können, mit Acrylsäure, Methacrylsäure oder anderen α,β-ungesättigten Säuren (d.h. substituierte Acrylsäuren wie Crotonsäure und dergleichen) oder vorzugsweise über eine Ringöffnungsreaktion von oleochemischen Epoxiden, meist mit Acrylsäure und/oder Methacrylsäure, aber auch mit anderen α,β-ungesättigten Säuren (d.h. substituierte Acrylsäuren wie Crotonsäure und dergleichen). Diese Reaktion wird im Folgenden beschrieben.

Die Herstellung oleochemischer Epoxide ist seit langem bekannt. Hierzu werden Ester/Triglyceride ungesättigter Fettsäuren der Epoxidation unterworfen. Bevorzugt sind pflanzliche Öle mit Iodzahlen über 120, z. B. Sonnenblumenöl, Sojaöl, Leinöl und dergleichen. Die Epoxidation erfolgt insbesondere durch Umsetzung ungesättigter Fettsäureester mit Persäuren, jedoch sind in der Literatur auch andere Verfahren bekannt.

Die Addition von α,β-ungesättigten Säuren wie Acryl- und Methacrylsäure an epoxidierte Fettsäureester (dazu zählen auch die epoxidierten Öle) ist dem Fachmann an sich bekannt. Es handelt sich um eine den Epoxidring öffnende Addition. Sie kann vollständig oder nach Wunsch auch nur teilweise durchgeführt werden. Im letzteren Fall enthalten solche Verbindungen dann einen Restoxiran.

Dementsprechend ist jede oleochemische epoxidierbare Verbindung und jedes oleochemische Polyol zur Herstellung von oleochemischem (Meth)Acrylat geeignet.

Petrochemische (Meth)Acrylate können ebenfalls auf beiden Synthesewegen hergestellt werden und werden dementsprechend wie die oleochemischen (Meth)Acrylate in Form monomerer Verbindungen erhalten. Ihre Abgrenzung zu den oleochemischen (Meth)Acrylaten erfolgt ausschließlich über den fettsäurehaltigen Ausgangsrohstoff, d.h. oleochemische (Meth)Acrylate sind Fettsäureester, deren Kohlenstoffkette zusätzlich mindestens einen (Meth)Acrylatrest trägt. Bevorzugt enthalten oleochemische (Meth)Acrylate mindestens eine Einheit des folgenden Strukturelements: 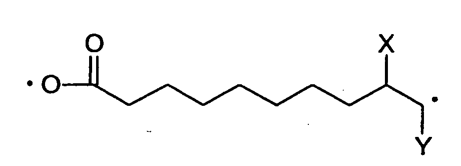 X= Acryl, Methacryl (allgemein α,β-ungesättigter Säurerest) an Position C₉; Y= OH, Acryl oder Methacryl (allgemein α,β-ungesättigter Säurerest) an Position C₁₀. Die Punkte an den beiden Enden der Strukturformel bedeuten die verbleibenden Valenzen des Strukturelements, die je nach oleochemischem Ausgangsmaterial unterschiedlich abgesättigt sind (siehe folgendes Beispiel).

Ein typisches Beispiel ist die folgende Verbindung:

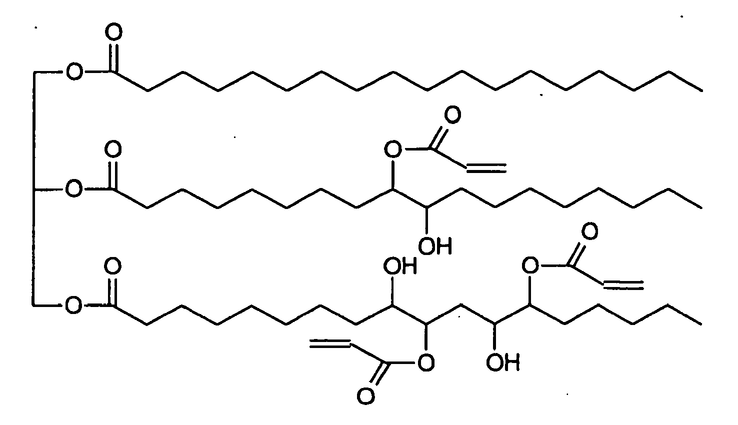

Die oleochemischen (Meth)Acrylate eignen sich zur Herstellung von Biopolymeren, da es sich bei ihnen um reaktive, härtbare Substanzen handelt. Die Härtung kann in vielfältiger Weise erfolgen, wobei diese dem Fachmann bekannten Methoden mit dem erfindungsgemäßen Verfahren kombiniert werden können. Im Einzellen sind dies:
1. Aushärtung mittels energiereicher Strahlung.
   Diese Verfahrensweise ist insbesondere für dünnere Schichten oder Oberflächen geeignet.
2. Thermische Energie.
   Diese Variante ist insbesondere für die weitere Beschleunigung des erfindungsgemäßen Verfahrens geeignet. Auch wird dabei der Doppelbindungsumsatz erhöht.
3. Sofern noch vorhanden können restliche Oxirangruppen mitvernetzt werden; dies kann durch reaktive Vernetzer (Anhydride, Säuren, Amine) oder kationische Härter (BF₃-Verbindungen, Supersäuren) erfolgen.

Es wurde erfindungsgemäß überraschend gefunden, dass ein Härtungssystem auf Basis von Ketonperoxid und/oder Hydroperoxid und Vanadiumbeschleuniger zur Kalthärtung von oleochemischen (Meth)Acrylaten geeignet ist. Dabei ist die ungewöhnlich hohe Wirksamkeit der Vanadiumverbindung gegenüber den oleochemischen (Meth)Acrylaten besonders überraschend, so dass diese erfindungsgemäß in der Form, in der sie üblicherweise erhalten werden, nämlich als Monomere kaltgehärtet werden können, ohne dass eine Vorvernetzung, beispielsweise durch Umsetzung mit Isocyanaten, erforderlich ist.

Im Vorfeld der Erfindung wurden nahezu alle gängigen bekannten Peroxide getestet. Als geeignet zur Kalthärtung oleochemischer (Meth)Acrylate erwiesen sich aber nur Ketonperoxide und Hydroperoxide.

Insoweit verhalten sich olechemische (Meth)Acrylate vollkommen anders als petrochemische (Meth)Acrylate. Wahrscheinlich sind die elektronischen Verhältnisse der reaktiven Doppelbindung in den oleochemischen (Meth)Acrylaten anders als bei petrochemischen (Meth)Acrylaten. Es liegt die Vermutung nahe, dass der lange Alkylrest bei Fettsäuren induktiv Elektronendichte in die acrylische Doppelbindung schiebt und somit die elektronischen Verhältnisse der Doppelbindung als auch der intermediär entstehenden Radikale gegenüber den Verhältnissen in petrochemischen (Meth)Acrylaten verändert. Auch sind die sterischen Verhältnisse in oleochemischen (Meth)Acrylaten schwieriger, da es sich durchweg um mittelständige (Meth)Acrylate handelt. Daher sind dann vermutlich bei Raumtemperatur oder leicht erhöhter Temperatur nur noch die Radikale von Ketonperoxiden und Hydroperoxiden in der Lage, die Radikalkette zu starten. Dies ist überraschend und war für den Fachmann nicht vorhersehbar.

Beim erfindungsgemäßen Verfahren wird das beschriebene oleochemische (Meth)Acrylat allein oder unter Mitverwendung von bis zu 70 Gew.% (wie z.B. 5 Gew.%, 10 Gew.%, 20 Gew.%, 30 Gew.%, 40 Gew.%, 50 Gew.% und 60 Gew.%; bezogen auf das Bindemittel) petrochemischem (Meth)Acrylat mit 0,05 bis 5 Gew.% Ketonperoxid, Hydroperoxid oder Mischungen davon (gegebenenfalls gelöst), 0,001 bis 3 Gew.% (berechnet auf den Vanadiummetallgehalt) Vanadiumbeschleuniger, vorzugsweise in Form einer Lösung, und gegebenenfalls weiteren Zusatzstoffen gut vermischt. Die Gew.%-Angaben beziehen sich auf das ungefüllte Härtungssystem bestehend aus Bindemittel, Peroxid und Beschleuniger, wobei der Begriff Bindemittel alle durch die erfindungsgemäß geeigneten Peroxide polymerisierbaren oleochemischen und petrochemischen (Meth)Acrylate umfasst. Die erhaltene Masse härtet bei Raumtemperatur je nach Dosierung des Beschleunigers und/oder des Peroxids in 0 bis 180 Minuten aus. Je geringer die Dosierung ausfällt desto länger ist die Aushärtungszeit.

Mögliche weitere Zusatzstoffe sind Vernetzer für Epoxide, Wachse, Mineralstoffe, Fasern (z.B. Natur- oder Glasfasern), Pigmente, Stabilisatoren, oxidativ trocknende Öle, Alkyde und Ester, Niedrigsieder und eine Vielzähl anderer Verbindungen.

Geeignete oleochemische Acrylate sind beispielsweise Sojaölacrylat (z. B. MERCRYL S der Firma HOBUM Oleochemicals GmbH) oder Leinölacrylat (z. B. MERCRYL LT der Firma HOBUM Oleochemicals GmbH). Das erfindungsgemäße Verfahren ist jedoch nicht auf diese oleochemischen Acrylate beschränkt. Die mitverwendbaren petrochemischen (Meth)Acrylate, z.B. (Meth) Acrylsäure, HDDA (Hexandioldiacrylat), TPGDA (Tripropylenglykoldiacrylat), BDDA (Butandioldiacrylat) und dergleichen, dienen zur Anpassung an das jeweils in Abhängigkeit von der vorgesehenen Verwendung gewünschte Eigenschaftsprofil (Erhöhung der Reaktivität des Systems, Einstellung von mechanischen Kenndaten der Biopolymere etc.).

Geeignete Ketonperoxide sind unter anderem 2-Butanonperoxid, 2-Pentanon-4-Methylperoxid, Cyclohexanonperoxid und Mischungen von einem oder mehreren dieser Peroxide. Geeignete Hydroperoxide sind unter anderem Cumolhydroperoxid, tert. Butylhydroperoxid und deren Mischungen.

Der Peroxidgehalt kann 0,05 bis 5 Gew.% (bezogen auf das ungefüllte Härtungssystem bestehend aus Bindemittel, Peroxid und Beschleuniger) betragen. Als besonders bevorzugt haben sich Peroxidgehalte von 1 bis 3 Gew.% erwiesen. Üblicherweise sind handelsübliche Peroxide als Lösungen mit Peroxidgehalten von 20 bis 50% erhältlich.

Als Beschleuniger eignen sich besonders in organischen Lösungsmitteln lösliche Vanadiumverbindungen der Oxidationsstufen +2 bis +5 (bevorzugt +3 oder +4). Solche Vanadiumverbindungen sind beispielsweise Vanadiumsalze, insbesondere von organischen aber auch anorganischen Säuren. Geeignete Säuren sind zum Beispiel Naphthensäure, p-Toluolsulfonsäure, Neodecansäure, Organophosphorsäure, Chinaldinsäure und andere. Die Erfindung ist aber nicht auf diese Säuren beschränkt. Weiterhin eignen sich auch Vanadiumchelatverbindungen der oben benannten Oxidationsstufen. Solche Verbindungen sind zum Beispiel Vanadylacetylacetonate. Gelöst werden die Vanadiumbeschleuniger beispielsweise in Chloroform, Alkoholen und anderen Lösungsmitteln. Auch handelsübliche Produkte wie Borchers® VP0132 (etwa 5,00 Gew.% Vanadium in Form einer organisch modifizierten Vanadiumverbindung gelöst in Glycolether, siehe auch EP 0 870 811 A2) können eingesetzt werden. Die Vanadiumbeschleuniger werden in Mengen von 0,001 bis 3 Gew.% Vanadiummetallgehalt (bezogen auf das ungefüllte Härtungssystem bestehend aus Bindemittel, Peroxid und Beschleuniger) zugesetzt. Als besonders bevorzugt haben sich Vanadiumgehalte von 0,1 bis 0,5% erwiesen.

Ohne Beschleuniger härtet das System bei Raumtemperatur nicht in praktikablen Zeiten aus.

Die Dosierung von Peroxid und Beschleuniger richtet sich nach der Anwendung und bestimmt die Aushärtungszeit. Bei Aushärtungszeiten unter einer halben Stunde sind die Oberflächen meist klebfrei. Bei längeren Aushärtungszeiten oder Verwendung von weiteren Zusatzstoffen (z. B. Fasern) kommt es in der Regel zu einem Schmierfilm auf der Oberfläche des ausgehärteten Polymers. Dies liegt an der Diffusion von Luftsauerstoff in die Oberfläche. Der Sauerstoff inhibiert dann die radikalische Polymerisation. Zur Unterdrückung dieser unerwünschten Nebenreaktion sind dem Fachmann Gegenmaßnahmen bekannt, z. B. Verwendung von Schutzgas, Abdecken mit Folie oder Wachs, Zusatz von Paraffinen, Leichtsiedern (z. B. Petrolether), niedrig siedenden Monomeren und/oder oxidativ trocknenden Ölen oder Alkyden.

Das System kann jederzeit durch lokale Erwärmung spontan gestartet werden. Ausgehend vom Erwärmungspunkt polymerisiert das System dann vollständig durch.

### Beispiel 1 (Herstellungsbeispiel):

In einem 500 ml Vierhalskölben wurden 260 g MERGINAT ESBO (epoxidiertes Sojaöl, HOBUM Oleochemicals GmbH, Oxirangehalt: 6,73%), 155 g Acrylsäure, 1,6 g BHT, (3,5-Di-tert.-butylhydroxytoluol) unter Rühren und Durchleiten von Luft bei 120°C zur Reaktion gebracht. Es wurde 6 h reagieren gelassen und die überschüssige Acrylsäure unter Durchleiten von Luft abdestilliert. Es wurde ein gelbes viskose Produkt erhalten. Dieses Produkt ist unter dem Handelsnamen MERCRYL S (HOBUM Oleochemicals) verfügbar.

### Beispiel 2 (Herstellungsbeispiel):

In einem 500 ml Vierhalskolben wurden 260 g MERGINAT ELO (epoxidiertes Leinöl, HOBUM Oleochemicals GmbH, Oxirangehalt: 8,82%), 203 g Acrylsäure, 1,8 g BHT unter Rühren und Durchleiten von Luft bei 120°C zur Reaktion gebracht. Es wurde 6 h reagieren gelassen und die überschüssige Acrylsäure unter Durchleiten von Luft abdestilliert. Es wurde ein gelb-braunes, sehr viskoses Produkt erhalten.

### Beispiel 3:

20 g MERCRYL S (siehe Beispiel 1) wurden mit 2 Gew.% ME 50L (PERGAN GmbH, aktiver Bestandteil 2-Butanonperoxid) und 1,5 Gew.% Vanadiumbeschleuniger (0.23 Gew.% V-Gehalt) vermischt und in dünner Schicht (ca. 3-5 mm) ausgegossen. Die Masse war nach 38 Minuten bei 20°C vollständig durchgehärtet.

### Beispiel 4:

20 g MERCRYL ST (Sojaölacrylat, Produkt der Firma HOBUM Oleochemicals GmbH) wurden mit 2 Gew.% ME 50L (siehe Beispiel 3) und 1 Gew.% Vanadiumbeschleuniger (0.25 Gew.% V-Gehalt) vermischt und in Schicht (ca. 3-5 mm) ausgegossen. Die Masse war nach 31 Minuten bei 21°C vollständig durchgehärtet.

### Beispiel 5:

20 g MERCRYL LT (Leinölacrylat, siehe oben) wurden mit 2 Gew.% verschiedener Peroxide (PERGAN GmbH) bei unterschiedlichen Vanadiumgehalten bei Raumtemperatur oder bei 35°C ausgehärtet. Der Vanadiumbeschleuniger hatte einen Metallgehalt von 0.21 Gew.% V. Die Tabelle gibt die Aushärtungszeiten wieder.

| Peroxid | Vanadiumbeschleuniger [Gew.%] | Temperatur [°C] | Härtungszeit [min] | Schmierfilm |
|---|---|---|---|---|
| C 50 LM | 1,0 | 20 | 9 | nein |
| C 50 LM | 0,7 | 20 | 28 | gering |
| MI 60 K | 1,0 | 20 | 16 | nein |
| ME 50 L | 0,8 | 20 | 55 | ja |
| ME 50 L | 1,0 | 20 | 30 | gering |
| ME 50 L | 1,0 | 35 | 13 | nein |
| ME 50 L | 1,5 | 20 | 26 | gering |
| ME 50 L | 1,5 | 35 | 8 | nein |
| ME 50 L | 2,0 | 20 | 15 | nein |
| ME 50 L | 2,0 | 35 | 5 | nein |

| | | | | |
|---|---|---|---|---|
| A-40 L (aktiver Bestandteil Acetylacetonperoxid) C-50 LM (aktive Bestandteile 2-Butanonperoxid und Cyclohexanonperoxid) MI-60 K (aktiver Bestandteil 2-Pentanon-4-methylperoxid) ME-50 L (aktiver Bestandteil 2-Butanonperoxid) | | | | |

### Beispiel 6:

20 g MERCRYL LT (Leinölacrylat, siehe oben) wurden mit 2 Gew.% ME 50L (siehe Beispiel 3) und 1,3 Gew.% Vanadiumbeschleuniger (0.21 Gew.% V) vermischt und auf ein 50/50 Flachs/Sisal-Fasergewebe gegeben. Der Faserverbund war nach 21 min klebfrei ausgehärtet.

## Patentansprüche

1. Verfahren zur Herstellung kaltgehärteter Biopolymere, bei dem oleochemisches (Meth)Acrylat mit Ketonperoxid, Hydroperoxid oder Mischungen davon und mit Vanadiumbeschleuniger bei Raumtemperatur oder leicht erhöhter Temperatur von weniger als 80°C ausgehärtet wird, wobei das oleochemische (Meth)Acrylat ein Fettsäureester ist, dessen Kohlenstoffkette zusätzlich mindestens einen (Meth)Acrylatrest trägt, und nicht durch Umsetzung mit Isocyanaten vorvernetzt ist.

2. Verfahren nach Anspruch 1, bei dem das oleochemische (Meth)Acrylat ausgewählt ist aus mit Acrylsäure und/oder Methacrylsäure ringgeöffneten epoxidierten pflanzlichen Ölen oder Estern.

3. Verfahren nach einem der vorangehenden Ansprüche, bei dem der Vanadiumbeschleuniger eine Vanadiumverbindung der Oxidationsstufe + 2 bis + 5, vorzugsweise + 3 oder + 4 ist.

4. Verfahren nach einem der vorangehenden Ansprüche, bei dem neben dem oleochemischen (Meth)Acrylat auch bis zu 70 Gew.% petrochemisches (Meth)Acrylat, bezogen auf die Gesamtmenge an oleochemischem und petrochemischem (Meth)Acrylat, verwendet wird.

5. Verfahren nach einem der vorangehenden Ansprüche, bei dem die Aushärtung in Gegenwart von einem oder mehreren Zusatzstoffen ausgewählt aus Fasern, insbesondere Naturfasern, Wachsen, oxidativ trocknenden Ölen, Alkyden und Estern, Mineralstoffen, Pigmenten und Stabilisatoren erfolgt.

6. Verfahren nach einem der vorangehenden Ansprüche, bei dem die Aushärtung unter Ausbildung von Handlaminaten, Faserverbundwerkstoffen oder Formkörpern erfolgt.

7. Verfahren nach einem der vorangehenden Ansprüche, bei dem die Aushärtung zusätzlich durch energiereiche Strahlung, thermische Energie, reaktive Vernetzer und/oder kationische Härter optimiert wird.

## Claims

1. Process for the preparation of cold-cured biopolymers comprising curing an oleochemical (meth)acrylate with ketone peroxide, hydroperoxide or mixtures thereof and with a vanadium accelerator at room temperature or slightly elevated temperature of less than 80°C, wherein the oleochemical (meth)acrylate is a fatty acid ester, the carbon chain of which further comprises at least one (meth)acrylate moiety, and is not pre-crosslinked by reaction with isocyanates.

2. Process according to claim 1, wherein the oleochemical (meth)acrylate is selected from epoxidized vegetable oils or esters which have been ring-opened with acrylic acid and/or methacrylic acid.

3. Process according to any one of the preceding claims, wherein the vanadium accelerator is a vanadium compound having an oxidation state of + 2 to + 5, preferably + 3 or + 4.

4. Process according to any one of the preceding claims, wherein in addition to the oleochemical (meth)acrylate also up to 70% wt.% of petrochemical (meth)acrylate is used, based on the total amount of oleochemical and petrochemical (meth)acrylate.

5. Process according to any one of the preceding claims, wherein curing takes place in the presence of one or more additives selected from fibers, particularly natural fibers, waxes, oxidatively drying oils, alkyds and esters, mineral compounds, pigments and stabilizers.

6. Process according to any one of the preceding claims, wherein curing takes place to form hand laminates, fiber composite materials or moldings.

7. Process according to any one of the preceding claims, wherein curing is further optimized by high-energy radiation, thermal energy, reactive crosslinking agents and/or cationic curing agents.

## Revendications

1. Procédé de préparation de biopolymères durcis à froid, dans lequel on fait durcir un acrylate ou méthacrylate oléochimique à l'aide d'un peroxyde de cétone, d'un hydroperoxyde ou d'un mélange de tels composés, ainsi qu'à l'aide d'un accélérateur au vanadium, à température ambiante ou légèrement élevée, inférieure à 80 °C, et dans lequel l'acrylate ou méthacrylate oléochimique est un ester d'acide gras dont la chaîne hydrocarbonée porte en outre au moins un groupe acrylate ou méthacrylate, et n'a pas subi une réticulation préalable par réaction avec un isocyanate.

2. Procédé conforme à la revendication 1, pour lequel l'acrylate ou méthacrylate oléochimique est choisi parmi les esters ou huiles végétales époxydés, à cycles ouverts à l'aide d'acide acrylique ou méthacrylique.

3. Procédé conforme à l'une des revendications précédentes, dans lequel l'accélérateur au vanadium est un composé du vanadium au degré d'oxydation +2 à +5, de préférence +3 ou +4.

4. Procédé conforme à l'une des revendications précédentes, dans lequel on utilise, en plus de l'acrylate ou méthacrylate oléochimique, un acrylate ou méthacrylate pétrochimique, en une quantité représentant jusqu'à 70 % du poids total de l'acrylate ou du méthacrylate oléochimique et de l'acrylate ou du méthacrylate pétrochimique.

5. Procédé conforme à l'une des revendications précédentes, dans lequel on opère le durcissement en présence d'un ou de plusieurs additif(s) choisi(s) parmi des fibres, en particulier des fibres naturelles, des cires, des huiles séchant par oxydation, des résines alkydes et des esters, des matières minérales, des pigments et des stabilisants.

6. Procédé conforme à l'une des revendications précédentes, dans lequel le durcissement a lieu pendant la fabrication de stratifiés fait à la main, de matériaux composites à fibres ou de pièces moulées.

7. Procédé conforme à l'une des revendications précédentes, dans lequel le durcissement est en outre optimisé à l'aide d'un rayonnement énergétique, d'énergie thermique, d'un agent réticulant réactif et/ou d'un durcisseur cationique.
